# EUROPÄISCHE PATENTSCHRIFT

(11) **EP 3 485 347 B1**
(45) Veröffentlichungstag und Bekanntmachung des Hinweises auf die Patenterteilung: **25.03.2020**
(21) Anmeldenummer: 17735541.9
(22) Anmeldetag: 06.07.2017
(51) Int. Cl.: G06F 3/01, G06F 3/147, G06F 3/0487, G02B 27/01, G06K 9/00, B60K 35/00

(54) **VERFAHREN ZUM BETREIBEN EINER ANZEIGEEINRICHTUNG EINES KRAFTFAHRZEUGS**
METHOD FOR OPERATING A DISPLAY DEVICE OF A MOTOR VEHICLE
PROCÉDÉ DE FONCTIONNEMENT D'UN MOYEN D'AFFICHAGE D'UN VÉHICULE AUTOMOBILE

(30) Priorität: 12.07.2016 DE 102016212687
(43) Veröffentlichungstag der Anmeldung: 22.05.2019
(73) Patentinhaber: Audi AG, 85045 Ingolstadt (DE)
(72) Erfinder: MERTENS, Joris, 85051 Ingolstadt (DE); HASLINGER, Georg, 85053 Ingolstadt (DE); HÉLOT, Jacques, 85051 Ingolstadt (DE); KLUG, Markus, 85057 Ingolstadt (DE)
(86) Internationale Anmeldenummer: PCT/EP2017/066910
(87) Internationale Veröffentlichungsnummer: WO 2018/011047

(56) Entgegenhaltungen:
- WO-A1-2007/000178
- WO-A1-2016/098102
- CN-A- 104 933 977
- DE-A1-102010 037 169
- DE-A1-102013 000 366
- DE-A1-102013 212 667
- US-A1- 2013 342 568
- US-A1- 2016 041 386
- RENATE HAEUSLSCHMID ET AL: "A Design Space to Support the Development of Windshield Applications for the Car", HUMAN FACTORS IN COMPUTING SYSTEMS, ACM, 2 PENN PLAZA, SUITE 701 NEW YORK NY 10121-0701 USA, 7. Mai 2016 (2016-05-07), Seiten 5076-5091, XP058257418, DOI: 10.1145/2858036.2858336 ISBN: 978-1-4503-3362-7

## Beschreibung

Die Erfindung betrifft ein Verfahren zum Betreiben einer Anzeigeeinrichtung eines Kraftfahrzeugs, wobei die Anzeigeeinrichtung dazu eingerichtet ist, ein digitales Bild auf einer Anzeigefläche des Kraftfahrzeugs auszugeben. Eine Anzeigeeinrichtung ist dabei ein Gerät oder eine Gerätekomponente, die zum Anzeigen von Bildinhalten ausgestaltet ist. Die Anzeigeeinrichtung kann ein digitales Bild auf einer Anzeigefläche des Kraftfahrzeugs ausgeben, also auf derjenigen Fläche, auf der das digitale Bild einem Benutzer erscheint. Mithilfe des erfindungsgemäßen Verfahrens kann eine erweiterte Realität ("Augmented Reality") eingesetzt werden.

Für einen Benutzer eines Kraftfahrzeug gibt es Computerprogramme, die eine erweiterte Realität einsetzen, und zum Ausführen dieser Programme setzt der Benutzer eine Datenbrille auf. Besonders in sogenannten pilotierten Kraftfahrzeugen, also in Kraftfahrzeugen, die autonom fahren, sollen solche Programme bevorzugt eingesetzt werden. Hierzu kann vorgesehen sein, dass die Datenbrille eine Blickrichtung des Benutzers erfasst und einen passgenaue Positionierung eines virtuellen Bildes auf einem definierten Anzeigebereich ermöglicht, also auf einem definierten Teilbereich des Anzeigefeldes der Anzeigeeinrichtung. Die Anzeigeeinrichtung ist dabei als Brillenglas der Datenbrille ausgestaltet. So kann beispielsweise ein Kamerabild einer realen Darstellung mit einer erweiterten Realität überlagert werden.

Eine solche Datenbrille sitzt direkt vor den Augen des Benutzers, weswegen der Benutzer auch bei einer Kopfbewegung immer in einer Frontalansicht auf die Anzeigefläche schaut und ein anzuzeigendes digitales Bild unverzerrt wahrgenommen wird. Bei der Verwendung von Computern mit einem Bildschirm anstelle einer Datenbrille wird der Bildschirm so gedreht, dass der Betrachter sich dem Bildschirm frontal zuwendet.

Benutzt man weder Datenbrille, noch Computer, ergibt sich bei zum Beispiel Nutzung eines Head-up-Displays mit einer Windschutzscheibe das Problem, dass der Fahrer oder die Insassen eine relativ große Anzeigefläche nutzen, die unter Umständen weiter von ihnen beanstandet ist.

Vor allem wenn der Benutzer beispielsweise eine seitliche Fensterscheibe eines pilotierten Kraftfahrzeugs als Anzeigefläche nutzen möchte, ist ein durch erweiterte Realität angezeigter Text unter Umständen stark verzerrt und schwer lesbar, da der Benutzer unter Umständen schräg durch die Fensterscheibe schaut, da er während der Fahrt angeschnallt ist. Anwenderprogramme ("Apps") für eine erweiterte Realität können in Verbindung mit einer Windschutzscheibe oder einer Seitenfensterscheibe zwar verwendet werden, die Darstellung der erweiterten Realität wird aber häufig verzerrt wahrgenommen. Für eine Darstellung ohne Verzerrung muss man zum Verwenden dieser Anwenderprogramme einen Computerbildschirm auf beispielsweise der Windschutzscheibe fixieren oder davor halten.

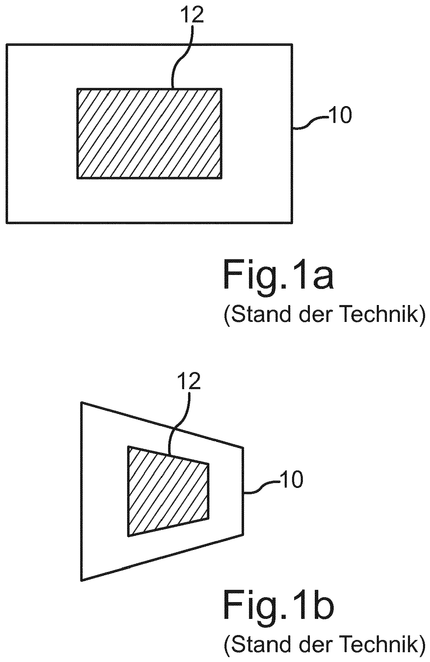

Das sich aus dem Stand der Technik ergebende Problem wird in den Fig. 1a und 1b dargestellt. Die Fig. 1a und 1b zeigen jeweils eine Anzeigefläche 10 mit einem darauf angezeigten digitalen Bild 12. In der Fig. 1a ist die Situation dargestellt aus Sicht eines Benutzers, der frontal vor der Anzeigefläche 10 steht oder sitzt und das digitale Bild 12 unverzerrt sieht. Die Fig. 1b zeigt die Situation, in der der Benutzer seitlich zu der Anzeigefläche 10 steht oder sitzt und somit nicht nur die Anzeigefläche 10, sondern auch das digitale Bild 12 perspektivisch verzerrt wahrnimmt. Die relative, perspektivisch bedingte Ausgestaltung des digitalen Bildes 12 der Fig. 1b bewirkt, dass der Benutzer das digitale Bild 12 als ein sich verjüngendes Objekt wahrnimmt, das näher an einem weiter entfernten Rand der Anzeigefläche 10 angeordnet ist als an einem im zugewandten Rand der Anzeigefläche 10. Zeigt das digitale Bild 12 beispielsweise eine Schrift oder einen Text, so ist dieser schlecht lesbar.

Die DE 10 2013 215 370 A1 schlägt vor, dass über ein Head-up-Display Informationen über eine Fahrsituation oder Steuerabsichten beispielsweise eine vorausfahrenden Fahrzeuges auf die Windschutzscheibe eingeblendet werden. Ein ähnliches Verfahren wird von der DE 10 2014 207 398 A1 vorgeschlagen, bei dem eine kraftfahrzeugexterne Kamera die Umgebung aufnimmt. Eine entsprechende Vorrichtung für eine Rückkamera ist in der DE 199 11 648 A1 beschrieben.

Die DE 10 2006 050 547 A1 schlägt eine Variante vor, bei der ein virtuelles Bild auf eine virtuelle Bildebene außerhalb des Kraftfahrzeugs projiziert wird.

Es besteht jedoch weiterhin der Nachteil, dass beispielsweise große Benutzer ein dargestelltes Bild verzerrt wahrnehmen. Hierzu schlägt die DE 10 2012 201 805 A1 vor, bei einem stereoskopischen Anzeigegerät ein sogenanntes Übersprechen von Stördaten auf einen Bildinhalt zu korrigieren. Aus der DE 10 2013 212 667 A1 ist ein Verfahren bekannt, bei dem ein Vorverzerren eines Bildes für ein erstes Auge des Betrachters stattfindet, sowie ein Vorverzerren eines zweiten Bildes für ein zweites Auge des Betrachters. Daraus wird ein dreidimensionales Bild generiert.

Der Stand der Technik weist weiterhin den Nachteil auf, dass die zuletzt genannten Verfahren vom Hersteller eingestellt werden und keine individuellen Bedürfnisse eines Passagiers berücksichtigen. Eine erweiterte Realität kann deswegen nur eingeschränkt bereitgestellt werden.

Die US 2016/0041386 A1 beschreibt ein Head-up-Display mit einer Projektionseinheit, die dazu eingerichtet ist, ein Bild auf einen Bildschirm zu werfen. Ein Steuergerät kann die Entfernung und den Blickwinkel einer Person relativ zu dem Head-up-Display berechnen und abhängig davon eine von der Person wahrgenommene Verzerrung des Bildes minimieren. Das Steuergerät kann ebenfalls ein aktuelles Bild um eine Schiefe korrigieren, die sich aufgrund der Position der Person oder der Projektion des Bildes auf den Bildschirm ergeben kann.

Die DE 10 2013 000 366 A1 beschreibt eine transparente Anzeigevorrichtung für einen Kraftwagen, aufweisend eine zwischen einer inneren Scheibe und äußeren Scheibe angeordneten Kontrastschicht, deren Transparenz veränderbar ist.

Aus der WO 2007/000178 A1 ist ein Verfahren zur verzerrungsfreien Darstellung von aus computergenerierten Bildpunkten zusammengesetzten und an einer nichtebenen Reflexionsfläche, insbesondere einer Windschutzscheibe eines Kraftfahrzeugs, reflektierten Bildelementen bekannt, bei welchem in einer Betriebsphase durch eine Recheneinheit abhängig von den Verzerrungseigenschaften der Reflexionsfläche aus originären Bilddaten der Bildelemente vorverzerrte Bilddaten gemäß darstellungsbezogener Vorverzerrungsparameter errechnet und an eine Anzeigeeinheit übergeben werden, welche die Bildelemente auf die Reflexionsfläche projiziert, und bei welchem zur Gewinnung der darstellungsbezogenen Vorverzerrungsparameter in einer Kalibrierungsphase mindestens ein Bildelement in zur Betriebsphase analoger Vorgehensweise in Form originärer Bilddaten bereitgestellt, vorverzerrt und projiziert wird und Bilddaten des Ergebnisses der Projektion kamera- und bildverarbeitungsbasiert aufgenommen und mit den originären Bilddaten verglichen werden.

Die CN 104 933 977 A beschreibt ein Bild-Darstellungssystem, das einen Bildschirm, ein Detektionsgerät und einen Bild-Kompensationschip umfasst.

Die DE 10 2010 037 169 A1 offenbart ein System, das einem Benutzer, der eine Szene durch ein Display betrachtet, ein räumlich ausgerichtetes Head-Up-Display bietet, wobei das System ein Bilderfassungssystem, ein Display und ein Steuerungssystem aufweist. Dabei beschreibt DE 10 2010 037 169 A1 ein Verfahren zum Betreiben einer Anzeigeeinrichtung eines Kraftfahrzeugs gemäß dem Oberbegriff des Anspruchs 1.

Die US 2013/342568 A1 offenbart eine Methode, bei der reale Objekte in der Umgebung eines Benutzers durch Nachzeichnen ihrer Kontur auf einem transparenten Display für den Betrachter besser sichtbar gemacht werden.

Aus der WO 2016/098102 A1 sind Verfahren und ein System zur Verbesserung der visuellen Wahrnehmung der Darstellung von Augmented Reality bekannt. Dabei wird die visuelle Hervorhebung eines in Sichtlinie befindlichen Objekts durch eine farblich angepasste Markierung an einem transparenten Bildschirm vorgeschlagen.

Eine der Erfindung zugrundeliegende Aufgabe ist das Verbessern einer erweiterten Realität auf einer Anzeigefläche eines Kraftfahrzeugs.

Die Aufgabe wird von dem erfindungsgemäßen Verfahren und den erfindungsgemäßen Vorrichtungen gemäß den unabhängigen Patentansprüchen gelöst. Vorteilhafte Weiterbildungen der Erfindung sind durch die Unteransprüche gegeben.

Die Erfindung basiert auf der Idee, mit Hilfe einer ersten Sensoreinrichtung des Kraftfahrzeugs eine Blickrichtung eines Benutzers auf die Anzeigefläche zu erfassen. In Abhängigkeit von dieser erfassten Blickrichtung wird dann das digitale Bild gestaltet, das durch die Anzeigeeinrichtung auf die Anzeigefläche ausgegeben wird. Hierdurch kann eine erweiterte Realität im Kraftfahrzeug genutzt und an die individuellen Bedürfnisse des Benutzers angepasst werden. Ein dargestellter Text kann so besser lesbar und weniger verzerrt dargestellt werden, auch wenn der Benutzer beispielsweise in einem sehr kleinen Winkel auf die Anzeigefläche schaut. Bei einer schrägen beziehungsweise perspektivischen Sicht auf die Anzeigefläche, wie etwa bei einem Blick durch eine Scheibe eines Seitenfensters im Kraftfahrzeug, wird die Anzeige für den Betrachter also unverzerrt dargestellt und somit gut lesbar. Bewegungen des Betrachters können so dynamisch ausgeglichen und ein ermüdungsfreies Betrachten der Inhalte sichergestellt werden. Hierdurch ergibt sich auch eine bessere Sichtbarkeit des digitalen Bildes.

Das erfindungsgemäße Verfahren zum Betreiben einer Anzeigeeinrichtung eines Kraftfahrzeugs, wobei die Anzeigeeinrichtung dazu eingerichtet ist, ein digitales Bild auf einer Anzeigefläche des Kraftfahrzeugs auszugeben, umfasst zunächst den Schritt des Erfassens einer Blickrichtung des Benutzers auf die Anzeigefläche durch eine erste Sensoreinrichtung, wobei der Benutzer sich in einem Innenraum des Kraftfahrzeugs befindet. Eine Sensoreinrichtung ist dabei ein Gerät oder eine Gerätekomponente, die zum sensieren beispielsweise physikalischer Parameter ausgestaltet ist, und beispielsweise einen oder mehrere Kameras oder Blickrichtungssensoren im Innenraum des Kraftfahrzeugs umfassen kann.

Durch eine Steuereinrichtung des Kraftfahrzeugs, also durch ein Gerät oder eine Gerätekomponente oder eine Software, die zum Verarbeiten von Daten und Erzeugen von Steuersignalen und zum Beispiel als Mikroprozessor oder Mikrokontroller ausgestaltet ist oder einen Mikroprozessor oder Mikrokontroller aufweisen kann, erfolgt in Abhängigkeit von der erfassten Blickrichtung ein Festlegen eines Anzeigeparameters des digitalen Bildes, das eine absolute bildliche Ausgestaltung des digitalen Bildes vorgibt. Ein Anzeigeparameter ist dabei ein Parameter, der die bildliche Ausgestaltung des digitalen Bildes beeinflusst, also beispielsweise eine Form und/oder eine Farbe und/oder eine perspektivische Verzerrung vorgibt. Die absolute bildliche Ausgestaltung des digitalen Bildes ist dabei diejenige Ausgestaltung, die das Bild tatsächlich hat, also zum Beispiel eine tatsächliche Form oder Position auf der Anzeigefläche.

Der Anzeigeparameter berücksichtigt dabei, dass sich aus der Blickrichtung des Benutzers auf die absolute bildliche Ausgestaltung des digitalen Bildes eine relative, perspektivisch bedingte Ausgestaltung des digitalen Bildes ergibt. Mit anderen Worten berücksichtigt der Anzeigeparameter eine Verzerrung des durch den Benutzer wahrgenommenen Bildes durch den individuellen Blickwinkel, also einer relativen Position des Benutzers zu dem digitalen Bild. Die relative, perspektivisch bedingte Ausgestaltung des digitalen Bildes ist also diejenige Ausgestaltung des digitalen Bildes, wie sie der Benutzer aus seiner Perspektive wahrnimmt. Dadurch entspricht die relative, perspektivisch bedingte Ausgestaltung des digitalen Bildes einer Sollausgestaltung des digitalen Bildes, also einer Ausgestaltung, die vom Benutzer wahrgenommen werden soll.

Bei einer schrägen oder perspektivischen Sicht auf die Anzeigefläche wird somit die Anzeige für den Betrachter unverzerrt dargestellt und ein angezeigter Text gut lesbar. Bewegungen des Betrachters können dynamisch ausgeglichen und ein ermüdungsfreies Betrachten der Inhalte sichergestellt werden. Ebenso können digitale Bilder oder Bildelemente, die eine bestimmte Position auf der Anzeigefläche in Relation zu einem durch ein Fenster des Kraftfahrzeugs wahrgenommenen Objekts einnehmen sollen, so dargestellt werden, dass der Benutzer sie unabhängig von seiner Größe oder Kopfbewegungen oder Sitzposition richtig positioniert wahrnehmen kann.

In einer besonders bevorzugten Ausführungsform des erfindungsgemäßen Verfahrens wird hierzu eine als transparenter Bildschirm ausgestaltete Anzeigeeinrichtung in dem Kraftfahrzeug bereitgestellt, wobei der Bildschirm eigenleuchtende Pixel aufweist und die Anzeigeeinrichtung die Anzeigefläche umfasst. Mit anderen Worten kann eine Fensterscheibe des Kraftfahrzeugs als Bildschirm ausgestaltet sein, der sich zu einer Projektionsfläche eines Head-up-Displays dahingehend unterscheidet, dass er selbstleuchtend ist, also selbst das digitale Bild erzeugt und ausgibt und nicht als Projektionsfläche für einen Projektor dient. Vorteilhafterweise ist dadurch das digitale Bild direkt auf der Fensterscheibe sichtbar und es bedarf keines extra Gerätes wie zum Beispiel einem Head-up-Display oder einem mobilen Endgerät. Dadurch wird auch Bauraum gespart. Anwenderprogramme für eine erweiterte Realität können mit einer solchen Anzeigeeinrichtung vorteilhaft im Kraftfahrzeug verwendet werden, ohne dass ein separater Computerbildschirm an der Fensterscheibe angebracht oder eine Datenbrille aufgesetzt werden muss.

Durch eine zweite Sensoreinrichtung des Kraftfahrzeugs erfolgt ein Erfassen der Umgebung des Kraftfahrzeugs. Hierzu können beispielsweise Kameras auf oder an einer Außenseite eines Kraftfahrzeugdaches angeordnet sein. Durch die Steuereinrichtung wird anhand der erfassten Blickrichtung ein Ermitteln der durch den Benutzer durch die Anzeigefläche sichtbare Umgebung des Kraftfahrzeugs ermittelt. Mit anderen Worten ermittelt die Steuereinrichtung, welchen Bereich der Umgebung des Kraftfahrzeugs von dem Benutzer gerade gesehen werden kann. Es erfolgt ein Ermitteln eines realen Objekts in der durch den Benutzer sichtbaren Umgebung, beispielsweise eines weiteren Kraftfahrzeugs oder eines Schiffes oder eines Baumes, und es erfolgt ein Ermitteln einer Kontur und einer Farbe des realen Objekts anhand von Sensordaten der zweiten Sensoreinrichtung. In Abhängigkeit von der ermittelten Kontur und der Farbe des realen Objekts erfolgt ein Anpassen des Anzeigeparameters, sodass die absolute bildliche Ausgestaltung des digitalen Bildes eine der Kontur des realen Objekts entsprechende Kontur und eine von der Farbe des realen Objekts unterschiedliche Farbe hat. Mit anderen Worten nimmt das digitale Bild die Kontur des realen Objektes an und eine Farbe, die sich von der eigentlichen Farbe des realen Objektes abhebt. Wenn sich also beispielsweise zwei reale Objekte in der sichtbaren Umgebung überlagern, kann beispielsweise eines davon oder beide durch die form- und/oder farbangepasste Form des digitalen Bildes abgehoben und die beiden Objekte können besser auseinander gehalten werden. Das digitale Bild kann als Markierungssymbol bezeichnet werden und dessen Form- und Farbanpassung sorgt für eine bessere Sichtbarkeit.

Zusätzlich ist vorgesehen, dass die zweite Sensoreinrichtung die Umgebung des Kraftfahrzeugs erfasst, die Steuereinrichtung anhand der erfassten Blickrichtung die durch den Benutzer durch die Anzeigefläche sichtbare Umgebung des Kraftfahrzeugs und das reale Objekt in der durch den Benutzer sichtbaren Umgebung ermittelt. In Abhängigkeit von einer Verbindungslinie zwischen einem Augpunkt des Benutzers und dem durch die transparente Anzeigefläche liegende realen Objekt ermittelt die Steuereinrichtung einen Schnittpunkt der Verbindungslinie mit der transparenten Anzeigefläche, und passt den Anzeigeparameter an, sodass dieser zum Markieren des durch den Benutzer sichtbaren realen Objekts auf der Anzeigefläche den ermittelten Schnittpunkt als Position des digitalen Bildes auf der Anzeigefläche beschreibt. Mit anderen Worten wird das digitale Bild derart auf der Anzeigefläche positioniert, dass es aus Sicht des Benutzers in einer vorbestimmten Relation zu dem sichtbaren realen Objekt steht. Hierdurch können Kopfbewegungen, Positionswechsel oder unterschiedliche Körpergrößen unterschiedlicher Benutzer berücksichtigt werden, indem das digitale Bild sich in seiner Position auf der Anzeigefläche dynamisch verändert.

Durch die Steuereinrichtung erfolgt außerdem ein Ermitteln einer Perspektive, aus der der Benutzer das digitale Bild sieht, vorzugsweise anhand der Sensordaten der ersten Sensoreinrichtung. Das Ermitteln des Anzeigeparameters berücksichtigt die ermittelte Perspektive und beschreibt dabei eine perspektivische Entzerrung des digitalen Bildes, so dass das digitale Bild aus einer Sollperspektive betrachtet werden kann, obwohl der Benutzer beispielsweise in einem sehr spitzen Winkel auf die Anzeigefläche schaut. Bei schräger oder perspektivischer Sicht auf die Anzeigefläche kann die Anzeige für den Benutzer trotzdem unverzerrt dargestellt werden und ein beispielhafter Text wird somit gut lesbar. Bewegungen des Betrachters können dynamisch ausgeglichen und ein ermüdungsfreies Betrachten der Inhalte sichergestellt werden.

In einer Weiterbildung erfolgt ein Bereitstellen eines Interessenprofils des Benutzers, ein Ermitteln einer Priorität des ermittelten realen Objekts anhand des Interessenprofils, und das Erzeugen des digitalen Bildes, falls die ermittelte Priorität einen vorbestimmten Wert aufweist. Es werden also nicht wahllos alle sichtbaren, realen Objekt markiert, sondern nur diejenigen, für die der Benutzer ein individuelles Interesse hat. In einer Weiterbildung hierzu kann ein Kontext eines Verhaltens des Benutzers ermittelt werden, durch a) Ermitteln eines Inhaltes von von dem Benutzer besuchten Internetseiten durch eine Browsereinrichtung, und/oder durch b) Ermitteln eines Inhaltes eines Gesprächs des Benutzers in dem Innenraum durch eine Sprachaufnahme- und Spracherkennungseinrichtung der Steuereinrichtung; und/oder c) Ermitteln eines Inhaltes eines digitalen Fragebogens; und/oder d) Ermitteln eines geographischen Ortes, beispielsweise anhand eines GPS-Signals eines tragbaren Navigationsgerätes, den der Benutzer mit oder ohne das Kraftfahrzeug besucht hat. Beispielsweise kann also der Kontext ermittelt werden, welche Geschäfte, Restaurants, Bars, Museen Konzerte, und/oder welche Natur oder Landschaften der Benutzer besucht, und/oder zum Beispiel eine Musik, die der Benutzer gehört hat. Anhand des ermittelten Kontextes erfolgt das Erstellen des Interessenprofils. Hierdurch erfolgt eine intellektuelle Erkennung der Interessen des Benutzers durch die Steuereinrichtung. Es entfällt die Notwendigkeit, dass der Benutzer die Steuereinrichtung gemäß seinen Interessen programmieren muss.

In einer Weiterbildung kann eine Krümmung der Anzeigefläche erfasst werden, beispielweise durch Auslesen von digital gespeicherten Herstellerdaten zu einer Krümmung einer Fensterscheibe, und das Ermitteln des Anzeigeparameters kann anhand der erfassten Krümmung erfolgen. Hierdurch kann ein perspektivischer Fehler, der durch eine designbedingte Ausgestaltung einer Fensterscheibe entstehen kann, ausgeglichen werden.

Die oben gestellte Aufgabe wird ebenfalls gelöst von einer Steuereinrichtung, die einen Mikroprozessor oder Mikrokontroller aufweisen kann, wobei der Mikroprozessor oder der Mikrokontroller dazu eingerichtet ist, die eine Steuereinrichtung betreffenden Verfahrensschritte eine der Ausführungsformen des erfindungsgemäßen Verfahrens durchzuführen. Es ergeben sich die oben genannten Vorteile.

Die oben genannte Aufgabe wird ebenfalls gelöst von einem Kraftfahrzeug, das eine erfindungsgemäße Steuereinrichtung aufweist, eine Anzeigeeinrichtung und eine Anzeigefläche. Auch hier ergeben sich die oben genannten Vorteile. In einer Weiterbildung kann das Kraftfahrzeug eine Anzeigeeinrichtung aufweisen, die die Anzeigefläche umfasst und als transparenter Bildschirm mit eigenleuchtenden Pixeln ausgestaltet ist, vorzugsweise wobei die Anzeigeeinrichtung als Fenster des Kraftfahrzeugs und/oder als Dual-View-Bildschirm ausgestaltet sein kann. Es ergeben sich die oben genannten Vorteile. Bei einem transparenten Dual-View-Bildschirm ergibt sich vorteilhaft, dass bei der Benutzung durch mehrere Benutzer jeder Benutzer nur diejenigen Marker sieht, die für ihn bestimmt sind.

Die Erfindung wird anhand der beigefügten Zeichnungen noch einmal durch konkrete Ausführungsbeispiele näher erläutert. Bei dem im Folgenden erläuterten Ausführungsbeispielen handelt es sich um bevorzugte Ausführungsformen der Erfindung. Bei den Ausführungsbeispielen stellen aber die beschriebenen Komponenten der Ausführungsformen jeweils einzelne, unabhängig voneinander zu betrachtenden Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar. Funktionsgleiche Elemente weisen in den Fig. dieselben Bezugszeichen auf. Es zeigt:
- Fig. 1a, Fig. 1b: jeweils eine schematische Skizze einer Frontalansicht beziehungsweise einer perspektivischen Sicht auf einer Anzeigefläche gemäß dem Stand der Technik,
- Fig. 2a: eine schematische Skizze zu einer Ausführungsform des erfindungsgemäßen Verfahrens,
- Fig. 2b: eine schematische Skizze zu der Ausführungsform der Fig. 2a in einer Aufsicht,
- Fig. 3a: eine schematische Skizze zu einer beispielhaften Umgebung, wie es von einem Insassen eines Kraftfahrzeugs gesehen werden kann,
- Fig. 3b: eine schematische Skizze zu einer weiteren Ausführungsform des erfindungsgemäßen Verfahrens,
- Fig. 4a, Fig. 4b: jeweils eine schematische Skizze zu einer weiteren Ausführungsform des erfindungsgemäßen Verfahrens,
- Fig. 5a, 5b, 5c: jeweils eine schematische Skizze zu einer weiteren Ausführungsform des erfindungsgemäßen Verfahrens, und
- Fig. 6a, 6b: jeweils eine schematische Skizze zu einer Ausführungsform eines erfindungsgemäßen Kraftfahrzeugs.

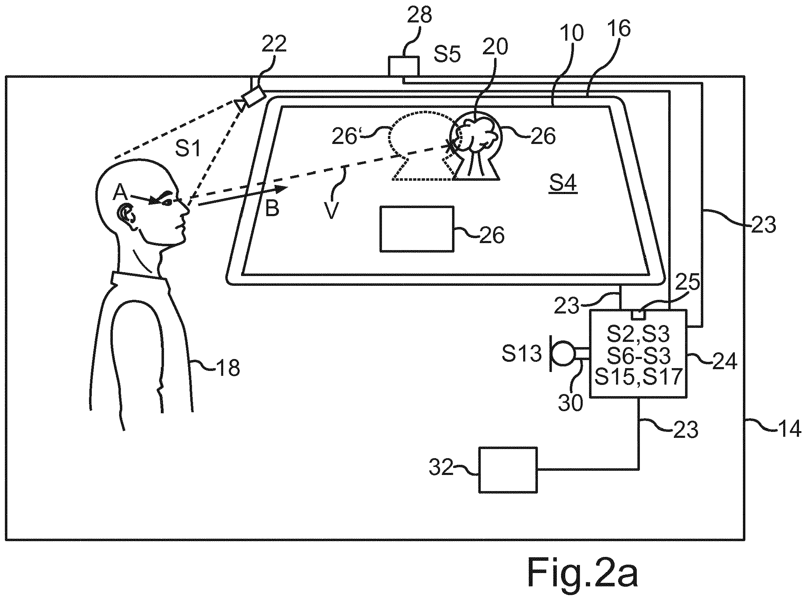

Die Fig. 2a verdeutlicht dabei schematisch das Prinzip des erfindungsgemäßen Verfahrens anhand eines ersten Ausführungsbeispiels. Hierzu zeigt die Fig. 2a ein Kraftfahrzeug 14, beispielsweise einen Kraftwagen wie zum Beispiel einen Personenkraftwagen oder einen pilotierten Personenkraftwagen. In dem Kraftwagen ist eine Anzeigeeinrichtung 16 angeordnet, die als transparenter Bildschirm ausgestaltet ist. Der beispielhafte transparente Bildschirm kann beispielsweise als transparenter OLED ("TOLED") ausgestaltet sein, also als sogenannter "Transparent Organic Light Emitting Device Bildschirm". Die einzelnen lichtemittierenden Elemente können dabei auch als Pixel des beispielhaften Bildschirms angesehen werden. In einem inaktiven Zustand sind diese nicht sichtbar. Erst bei einer Aktivierung wird der gewünschte Bildschirm sichtbar. Techniken zum Herstellen eines solchen transparenten Bildschirmes sind dem Fachmann aus dem Stand der Technik bekannt. Die beispielhafte erfindungsgemäße Anzeigeeinrichtung kann jedoch in einem Kraftfahrzeug 14 verbaut werden, indem der Bildschirm beispielsweise als Seitenfenster oder Windschutzscheibe zugeschnitten und verwendet wird.

Wird das erfindungsgemäße Verfahren auf mehrere Benutzer 18 angewendet (in der Fig. 2a ist nur ein Benutzer 18 gezeigt), so kann vorteilhafterweise ein sogenannter Dual-View-Bildschirm verwendet werden. Eine entsprechende Elektronik ist dem Fachmann auch hier aus dem Stand der Technik zur Herstellung von Navigationssystemen bekannt. Alternativ können die Menüs und Marker zum Beispiel durch eine Form und/oder eine Farbe personalisiert werden, sodass mehrere Insassen sehen könne, welche Anzeigen oder digitale Bilder für sie sind.

Aufgrund der Transparenz der beispielhaften Anzeigefläche 10 des Beispiels der Fig. 2a kann der Benutzer 18 beispielsweise ein reales Objekt 20 sehen, das sich in einer Umgebung außerhalb des Kraftfahrzeugs befindet, beispielsweise ein anderes Auto, einen Baum oder ein Boot.

Das Kraftfahrzeug 14 weist eine erste Sensoreinrichtung 22 auf, beispielsweise eine Kamera oder eine Stereobildkamera, die vorzugsweise in einem Innenraum des Kraftfahrzeugs an einem Kraftfahrzeugdach angeordnet sein kann. Die erste Sensoreinrichtung 22 kann zum Beispiel durch eine drahtgebundene oder drahtlose Datenkommunikationsverbindung 23, beispielsweise einem Datenbus des Kraftfahrzeugs 14 oder einer WLAN Verbindung, mit einer Steuereinrichtung 24 des Kraftfahrzeugs 14 verbunden sein. Die Anzeigeeinrichtung 16 ist dabei ebenfalls mit einer Datenkommunikationsverbindung 23 mit der Steuereinrichtung 24 verbunden. Die Steuereinrichtung 24 kann beispielsweise als separates Steuergerät mit einem Mikroprozessor 25 oder Mikrochip ausgestaltet sein. Die Steuereinrichtung 24 kann alternativ zum Beispiel als Steuerchip der Anzeigeeinrichtung 16 ausgestaltet und beispielsweise in einer Schalttafel des Kraftfahrzeugs 14 verbaut sein. Auf der Anzeigefläche 10 ist ein digitales Bild 26 zu sehen. Im Beispiel der Fig. 2a ist das digitale Bild 26 zum Beispiel als Umrandung des realen Objektes 20 ausgestaltet.

In dem in der Fig. 2a dargestellten Ausführungsbeispiel weist das beispielhafte Kraftfahrzeug 14 eine weitere Sensoreinrichtung 28 auf, die eine Umgebung außerhalb des Kraftfahrzeugs 14 erfassen kann (S5). Diese Sensoreinrichtung 28 kann vorzugsweise auf einer Außenseite eines Kraftfahrzeugdachs angeordnet sein.

Weiterhin kann das Kraftfahrzeug 14 optional eine Sprachaufnahme- und Spracherkennungseinrichtung 30 aufweisen, die zum Beispiel als Richtmikrofon der Steuereinrichtung 24 oder als von der Steuereinrichtung 24 separate Komponente ausgestaltet sein kann. Diese ist dazu eingerichtet, eine Sprachaufnahme durchzuführen und so zum Beispiel ein Gespräch mehrerer Insassen oder ein Tonsignal eines Radios aufzunehmen. Weiterhin ist die Sprachaufnahme- und Spracherkennungseinrichtung dazu eingerichtet, das aufgenommene Tonsignal zu analysieren und eine gesprochene Sprache zu erkennen. Hierfür sind dem Fachmann aus dem Stand der Technik geläufige Algorithmen bekannt, mit denen zum Beispiel auch eine Intonation der Sprache ermittelt werden kann. Anhand der Intonation kann dann eine Priorität von etwas, über das der Benutzer 18 spricht, ermittelt werden.

Die Steuereinrichtung 24 kann optional mit einer Browsereinrichtung 32 verbunden sein, beispielsweise einem Steuerchip eines Bordcomputers, der zum Bereitstellen einer Internetverbindung eingerichtet sein und beispielsweise eine Software zum Nutzen des Internets haben kann.

Gemäß dem erfindungsgemäßen Verfahren erfasst die Sensoreinrichtung 22 eine Blickrichtung B (in der Fig. 2a als Pfeil dargestellt) des Benutzers 18 (Verfahrensschritt S1). Im Beispiel der Fig. 2a kann der Benutzer 18 beispielsweise an einer Seitenwand des Kraftfahrzeugs 14 sitzen und dadurch aus einem sehr kleinen Blickwinkel durch die Fensterscheibe, also die Anzeigefläche 10 schauen. Das Beispiel der Fig. 2a zeigt dabei ein Ausführungsbeispiel, in dem der Benutzer 18 direkt oder indirekt aus dem Augenwinkel ein reales Objekt 20 der Umgebung des Kraftfahrzeugs 14 sieht. Die Steuereinrichtung 24 kann diese sichtbare Umgebung dann ermitteln (S6).

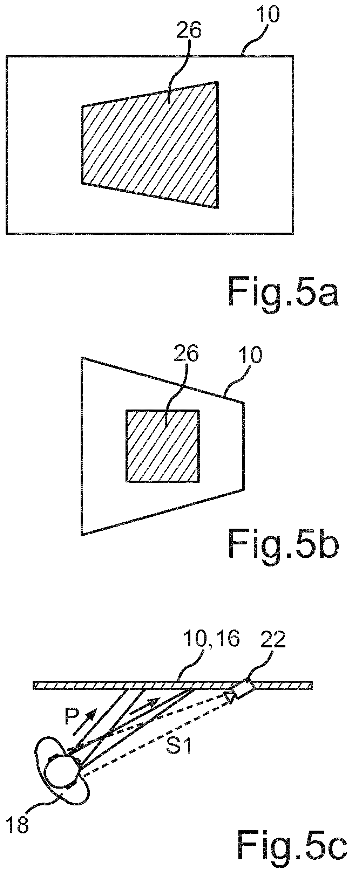

In einer nicht beanspruchten Variante kann der Benutzer 18 jedoch auch ein rechteckiges Textfeld oder ein Feld, in dem ein Film gezeigt wird, als digitales Bild 26 ansehen, das im Beispiel der Fig. 2a in der Frontalansicht gezeigt ist. Durch seine Blickrichtung B und dem spitzen Blickwinkel kann dieses beispielhafte Textfeld für den Benutzer 18 jedoch nicht als wie ein in der Fig. 2a gezeigtes Rechteck in der Frontalansicht aussehen, sondern perspektivisch verzerrt, mit anderen Worten weist für den Benutzer 18 das digitale Bild 26 eine relative, perspektivisch bedingte Ausgestaltung auf. Diese Variante des Verfahrens wird weiter unten in den Fig. 5a, 5b und 5c näher erläutert.

Die Steuereinrichtung 24 kann dann das von der zweiten Sensoreinrichtung 28 übermittelte Kamerabild als gängiges Bildanalyseverfahren, beispielsweise durch Shape Recognition, einzelne reale Objekte 20 erkennen, die der Benutzer 18 sieht (S6). Die Steuereinrichtung 24 kann ebenfalls eine Kontur und/oder eine Farbe des realen Objekts 20 ermitteln (S7).

Im Beispiel der Fig. 2a legt die Steuereinrichtung in Abhängigkeit von der erfassten Blickrichtung B einen Anzeigeparameter des digitalen Bildes 26 fest (S2). Dieser Anzeigeparameter bestimmt beispielsweise eine Form und/oder eine Farbe und/oder eine relative Position des digitalen Bildes auf der Anzeigefläche 10. Dies kann beispielsweise durch eine Bildverarbeitungssoftware, die in der Steuereinrichtung 24 vorhanden sein kann, erfolgen. Beispielsweise kann der Anzeigeparameter eine Form vorgeben, die eine Umrandung des realen Objekts 20 ist.

Das Beispiel der Fig. 2a zeigt dabei eine Soll-Ausgestaltung des digitalen Bildes 26, also diejenige Ausgestaltung, wie der Benutzer 18 das digitale Bild 26 trotz seiner seitlichen Position und seinem spitzen Blickwinkel auf die Anzeigefläche 10 wahrnehmen soll. In diesem Fall sieht es für den Benutzer 18 so aus, dass das digitale Bild 26 das reale Objekt 20 umrandet. Die tatsächliche Ausgestaltung, also die absolute bildliche Ausgestaltung des digitalen Bildes 26 kann, von einer Frontalperspektive aus gesehen, jedoch so ausgestaltet sein wie das gestrichelt gezeichnete digitale Bild 26', das für einen Betrachter mit einer Frontalperspektive, also in einer Frontalansicht, als von dem realen Objekt 20 nach beispielsweise links verschoben aussehen kann. Die Verschiebung der Position ergibt sich aus dem Festlegen des Anzeigeparameters (S2), bei dem die erfasste Blickrichtung B und/oder eine relative Position des Benutzers 18 zu der Anzeigefläche 10, mit einbezogen ist. Für den Benutzer 18 ergibt sich, mit anderen Worten, aus der absoluten bildlichen Ausgestaltung des digitalen Bildes 26, also in diesem Beispiel durch eine scheinbar verschobene Positionierung, und seiner Perspektive aus seiner Blickrichtung B die Sollgestaltung des digitalen Bildes 26, in der das digitale Bild 26 scheinbar das reale Objekt 20 umrandet. Das reale Bild 26 wird dabei von der Steuereinrichtung 24 erzeugt (S3) und durch die Anzeigeeinrichtung 16 ausgegeben (S4).

Zusätzlich legt der Anzeigeparameter eine Farbe fest, in der das digitale Bild 26 ausgegeben wird. Eine solche Farbauswahl kann beispielsweise von einem Händler des Kraftfahrzeugs 14 voreingestellt sein. Die beispielhafte Bilderkennungssoftware kann beispielsweise ermitteln, dass das reale Objekt 20, der beispielhafte Baum, hauptsächlich in grün erscheint und/oder zum Beispiel in einen grünen Hintergrund stehen kann. In diesem Fall kann der Anzeigeparameter beispielsweise festlegen, dass das digitale Bild 26, das beispielhafte Markierungssymbol, schwarz erscheinen kann. Sieht der Benutzer 18 beispielsweise durch die Anzeigefläche 10 eine Winterlandschaft voller Schnee, so kann eine schwarze Einfärbung des digitalen Bildes vorteilhaft sein. Hierdurch wird der Kontrast dem realen Bild der Umgebung erhöht.

Bewegt sich beispielsweise der Benutzer 18, so wird die beispielhafte Position des digitalen Bildes 26 dynamisch angepasst (S8), so dass das digitale Bild 26 in seiner absoluten Ausgestaltung zum Beispiel über die Anzeigefläche 10 "wandern" kann, während sich der Benutzer 18 bewegt. Aus Sicht des Benutzers 18 bleibt das digitale Bild 26 jedoch immer in seiner relativen Position zu dem realen Objekt 20.

Bei einer solchen dynamischen Anpassung (S8) kann die Steuereinrichtung 24 in Abhängigkeit von einer Verbindungslinie V (in der Fig. 2a gestrichelt dargestellt) zwischen einem Augpunkt A des Benutzers 18 und dem realen Objekt 20 einen Schnittpunkt S zwischen der Verbindungslinie V und dem realen Objekt 20 ermitteln (S9). Der Anzeigeparameter beschreibt dann den ermittelten Schnittpunkt S als Position auf der Anzeigefläche zum Markieren des realen Objekts 20.

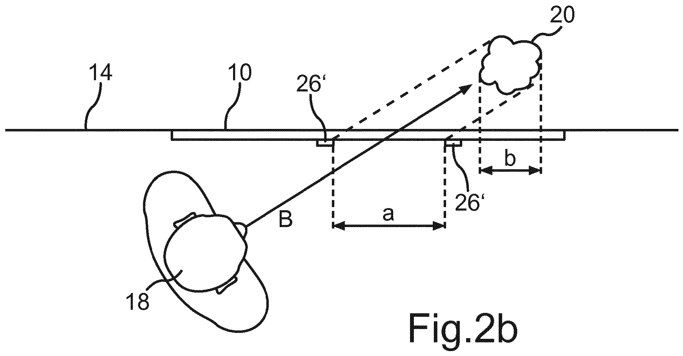

Die Fig 2b zeigt ausschnittsweise eine Sicht von oben auf den Benutzer 18 und die Anzeigefläche 10. Die Fig. 2b veranschaulicht dabei die Form des digitalen Bildes 26', die sehr viel größer ist als von dem Benutzer 18 wahrgenommen, wobei in der Fig. 2b die Bezugszeichen 26' auf die Außenränder des digitalen Bildes 26' gerichtet sind. Die gestrichelte Linie markiert dabei die aus Benutzerperspektive umrahmte Umgebung. Eine Breite a des digitalen Bildes 26' kann dabei breiter sein als eine Breite b, die das reale Objekt 20 bei einer Frontalansicht aus Benutzersicht hätte, um die Sollperspektive zu ermöglichen.

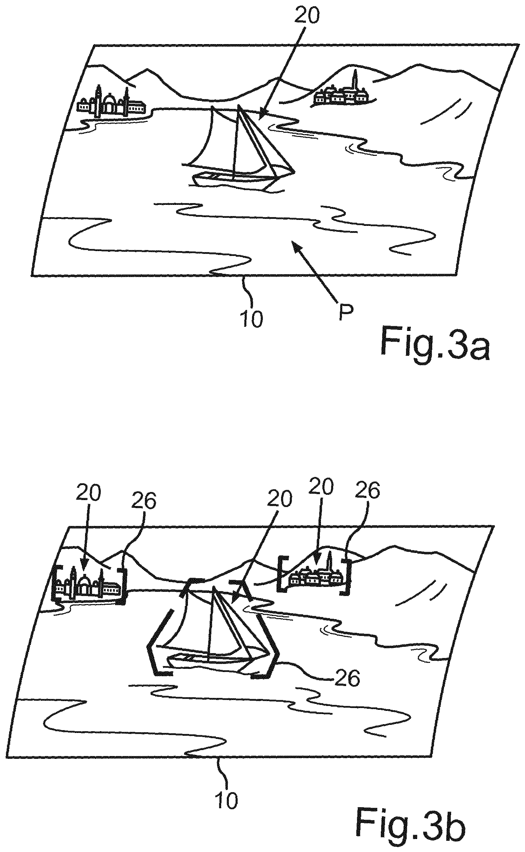

Die Fig. 3a und 3b veranschaulichen noch einmal ein weiteres Ausführungsbeispiel des erfindungsgemäßen Verfahrens in der zur Fig. 2a beschriebenen Variante. Dabei zeigt die Fig. 3a die Anzeigefläche 10 und die Umgebung des Kraftfahrzeugs 14, wobei die Umgebung als Panorama P zu sehen sein kann. Als reales Objekt 20 kann der Benutzer 18 beispielsweise ein Boot, eine Burg und ein Haus sehen. Die Fig. 3b zeigt die relativen, perspektivisch bedingten Ausgestaltungen der digitalen Bilder 26, die der Benutzer 18 als Rahmen mit einer angepassten Form und/oder Farbe sehen kann.

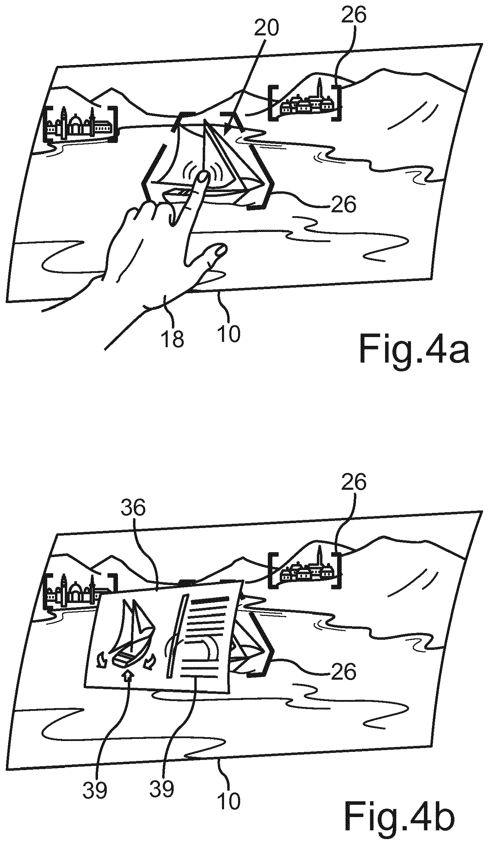

Zusätzlich kann beispielsweise vorgesehen sein, dass die Anzeigeeinrichtung 16 zum Beispiel ein Informationsfeld 36 mit zum Beispiel Informationen zu dem realen Objekt 20 anzeigen kann. Dies kann beispielsweise durch Antippen eines Bereichs der Anzeigefläche 10 durch einen Finger des Benutzers 18 erfolgen (Fig. 4a). Hierzu kann die Anzeigefläche 10 beispielsweise mit einer aus dem Stand der Technik bekannten berührungssensitiven Folie überzogen sein, die als Bedieneinrichtung eingerichtet sein kann. Als Bedieneinrichtung kann sie die Bedienhandlung des Benutzers 18, also das Antippen, erfassen und in ein digitales Signal umsetzen. Die Fig. 4b zeigt dabei Informationen 36, die daraufhin von der Anzeigeeinrichtung 16 erzeugt und auf der Anzeigefläche 10 angezeigt werden können. Im Beispiel der Fig. 4b kann dies zum Beispiel ein interaktives, dreidimensionales Modell 38 mit virtuellem Drehen sein. Weiterhin kann beispielsweise eine Textbeschreibung 39 ausgegeben werden. Die Fig. 4b und 4a zeigen dabei beispielhaft, wie das reale Objekt 20 das form- und/oder farbangepasste digitale Bild 26 umrahmen kann.

Die Fig. 2a zeigt eine optionale Sprachaufnahme- und Spracherkennungseinrichtung 30, die beispielsweise in die Steuereinrichtung 24 oder zum Beispiel in ein Lenkrad des Kraftfahrzeugs 14 integriert sein kann. Es kann gemäß dem erfindungsgemäßen Verfahren optional vorgesehen sein, dass diese Sprachaufnahme- und Spracherkennungseinrichtung 30 zum Beispiel ein Gespräch von anderen Benutzern 18 aufnehmen und anhand von zum Beispiel einem aus dem Stand der Technik bekannten Algorithmus eine Spracherkennung durchführen kann. Durch die Spracherkennung kann zum Beispiel ermittelt werden, über welches Thema die Benutzer 18 sprechen (S13). Hierdurch können zum Beispiel Schlüsselwörter herausgefiltert werden, so dass durch die Spracherkennung ein Interessensgebiet der Benutzer 18 ermittelt werden kann. Ein durch die Spracherkennung ermittelter Kontext des Gesprächs kann dann genutzt werden, um ein Interessenprofil des Benutzers 18 (oder mehrerer Benutzer 18) bereitzustellen (S10) oder zu erstellen (S14), das beispielsweise als digitale Datei in der Steuereinrichtung 24 hinterlegt werden kann. Unterhalten sich mehrere Benutzer 18 beispielsweise über das Thema Natur, so kann das Interessenprofil zum Beispiel Begriffe wie "Baum", "Blumen" oder "Berg" speichern. Alternativ oder zusätzlich kann auch vorgesehen sein, dass die Sensoreinrichtung 22 dazu eingerichtet sein kann, eine Mimik des Benutzers 18 zu erfassen und die Steuereinrichtung 24 mithilfe einer entsprechenden Software erkennen kann, ob etwas, über das der Benutzer 18 gerade spricht, interessant ist oder mit Freude verbunden ist. Das Interessensprofil kann zum Beispiel auch anhand von in einem Navigationssystem (in der Fig. 2a nicht gezeigt) gespeicherten Fahrtzielen oder sogenannten "points of interests" einer aktuellen Fahrtroute erstellt werden.

Erkennt die Steuereinrichtung 24 beispielsweise durch die Bildanalyse einen Baum als reales Objekt 20, kann die Steuereinrichtung 24 das Ergebnis der Mustererkennung mit den abgelegten Begriffen des Interessenprofils vergleichen. Im erwähnten Beispiel kann der Vergleich dann ergeben, dass auch in dem digitalen Interessenprofil der Schlüsselbegriff "Baum" oder "Natur" abgelegt ist. Anhand dieses Ergebnisses des Vergleichs kann die Steuereinrichtung 24 dann den Baum als zu markierendes reales Objekt 20 auswählen. Ein anderes durch die Bildanalayse erkanntes Objekt, beispielsweise ein Fabrikgebäude, kann dann nicht markiert werden, weil der Begriff nicht in dem Interessenprofil abgelegt ist. Allerdings kann der Insasse zum Beispiel jederzeit die Möglichkeit haben, auf der beispielhaften Fensterscheibe auf ein Objekt 20 zu tippen, auch wenn ein reales Objekt 20 nicht markiert ist. Dieses Objekt 20 kann dann markiert und Informationen hierzu können abgerufen werden.

Das Interessenprofil kann alternativ oder zusätzlich auch anhand eines Inhaltes von Internetseiten, die von dem Benutzer 18 besucht wurden, durch die optionale Browsereinrichtung 32 erstellt werden (S14). Hierzu kann das Ergebnis der Bildanalyse mit einem Inhalt von in einem Speicher der Browsereinrichtung 32 gespeicherten Internetseiten verglichen werden.

Als weiteres Ausführungsbeispiel ist denkbar, dass der Benutzer 18 beispielsweise beim Kauf des Kraftwagens 14 einen digitalen Fragebogen ausgefüllt hat, in dem er seine Interessen angibt. Diese digitale Information kann dann beispielsweise in der Steuereinrichtung 24 hinterlegt sein.

In dem Beispiel mit dem Baum als realem Objekt 20, der ebenfalls als Begriff in dem Interessenprofil hinterlegt sein kann, wurde gezeigt, dass die Steuereinrichtung 24 eine Priorität des ermittelten realen Objekts 20 anhand des Interessenprofils ermitteln kann (S11). Hierbei kann vorgesehen sein, dass bei einem positiven Vergleich des Ergebnisses der Bildanalyse und des Ergebnisses des Interessenprofils eine Priorität in Form eines Wertes vergeben wird, wobei das digitale Bild 26 dann erzeugt werden kann, wenn die ermittelte Priorität einen vorbestimmten Wert aufweist (S12).

Die Fig. 5a, 5b, 5c zeigen ein weiteres Ausführungsbeispiel eines Verfahrens, bei dem die Steuereinrichtung 24 (in Fig. 5a bis 5c nicht gezeigt) anhand der Blickrichtung P des Benutzers 18 eine Perspektive ermitteln kann, aus der der Benutzer 18 das digitale Bild 26 sieht (S15). Die Fig. 5c zeigt dabei den Benutzer 18 und den Winkel, in dem der Benutzer 18 auf die Anzeigefläche 10 schaut. Bei einer Kopfbewegung ändert sich die Blickrichtung P in die Blickrichtung P'.

Bei dem Festlegen des Anzeigeparameters (S2) wird dann die ermittelte Perspektive berücksichtigt und der Anzeigeparameter beschreibt eine perspektivische Entzerrung des digitalen Bildes 26, so dass das digitale Bild 26, wie in der Fig. 5b gezeigt, aus der Sollperspektive betrachtet werden kann. Die Fig. 5b zeigt, dass das digitale Bild 26 aus der Sollperspektive beispielhaft als Quadrat oder Rechteck erscheint. Handelt es sich bei dem digitalen Bild 26 beispielsweise um ein Textfeld, so kann ein darauf dargestellter Text sehr gut gelesen werden, da alle Buchstaben gleich groß erscheinen.

Die Fig. 5a zeigt die entsprechende absolute bildliche Ausgestaltung des digitalen Bildes 26, wobei das rechteckige Textfeld beispielsweise zu einem sich öffnenden Trapez verzerrt wurde, damit es aus der Betrachterperspektive, also aus der Sollperspektive, unverzerrt erscheint (Fig. 5b). Mit anderen Worten zeigt die Fig. 5a das vorverzerrte digitale Bild 26 in einer Frontalansicht, also in seiner absoluten bildlichen Ausgestaltung.

Bei der Ermittlung des Anzeigeparameters kann zum Beispiel auch eine Krümmung der Anzeigefläche 10, beispielsweise eine Krümmung einer Seitenfensterscheibe, mit berücksichtigt werden. Hierzu kann in der Steuereinrichtung 24 beispielsweise ein vom Hersteller gespeicherter Krümmungsfaktor hinterlegt sein.

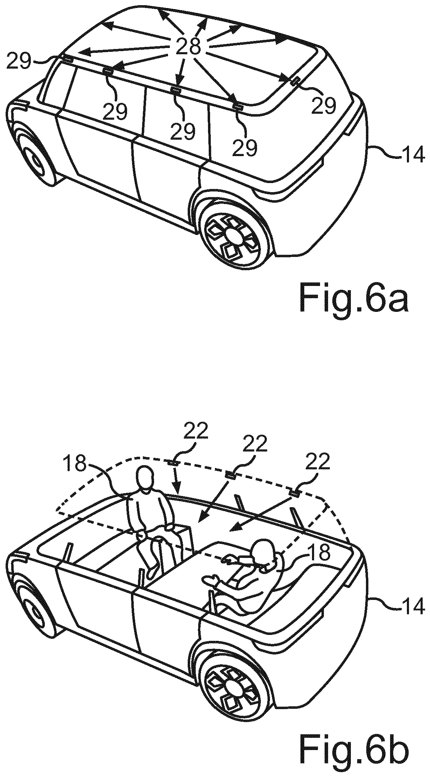

Die Fig. 6a zeigt beispielhaft ein Ausführungsbeispiel eines erfindungsgemäßen Kraftfahrzeugs 14. Dabei kann es sich zum Beispiel um einen Personenkraftwagen, vorzugsweise um einen pilotierten Personenkraftwagen, handeln. Die Fig. 6a zeigt dabei das Kraftfahrzeug 14 mit einer zweiten Sensoreinrichtung 28, wobei die zweite Sensoreinrichtung 28 beispielsweise mehrere Einzelkameras 29 aufweisen kann. Die beispielhaften Einzelkameras 29 können durch gängige Methoden an dem Kraftfahrzeug 14 gelagert oder befestigt sein, indem beispielsweise die Einzelkameras 29 in eine Dachhaut oder in eine Mulde der Kotflügel integriert oder aufgesteckt werden. Vorzugsweise kann vorgesehen sein, dass die Einzelkameras 29 zum Beispiel in ein Band eingebettet sein können, wobei das Band das Kraftfahrzeugdach umranden kann. Die Pfeile auf dem Dach des Kraftfahrzeugs 14 zeigen dabei auf vorteilhafte Positionen der Einzelkameras 29. So kann die Umgebung des Kraftfahrzeugs 14 und um das Kraftfahrzeug 14 herum aufgenommen werden.

Die Fig. 6b zeigt ein weiteres Ausführungsbeispiel des Kraftfahrzeugs 14, wobei der Innenraum des Kraftfahrzeugs 14 mit zwei Benutzern 18 dargestellt ist. Als gepunktete Linie ist ein Innenrand des Kraftfahrzeugs 14 dargestellt, der beispielsweise zum Anbringen der Sensoreinrichtung 22 genutzt werden kann. Die beispielhaften Kameras der ersten Sensoreinrichtung 22 können beispielsweise an einer Leselampe oder an einer Innenseite am Kraftfahrzeugdaches umlaufenden Band angeordnet sein. Die erste Sensoreinrichtung 22 kann dabei ebenfalls mehrere Einzelkameras aufweisen. Die Pfeile zeigen dabei beispielhaft die Orientierung der Einzelkameras.

Die oben aufgeführten Ausführungsbeispiele veranschaulichen das Prinzip der vorliegenden Erfindung, ein digitales Bild 26, also ein Anzeigeelement, eine Anzeigefläche 10, beispielsweise eine Fahrzeugfensterscheibe, mittels Blickerkennung und/oder Blickrichtungerkennung, perspektivisch zum Betrachter geneigt und dynamisch anzupassen.

Gemäß einem weiteren Ausführungsbeispiel kann durch das Erfassen der Blickrichtung P (S1) nicht nur eine Position des digitalen Bildes 26 bestimmt werden, sondern auch ein Betrachtungswinkel zur Anzeigefläche 10, also beispielsweise zu dem Display. Diese schräge/perspektivische Sicht kann digital ausgeglichen werden und dabei können auch zum Beispiel gekrümmte Anzeigeflächen 10 (wie etwa eine Seitenfensterscheibe im Kraftfahrzeug 14) mit einberechnet werden.

Bei schräger/perspektivischer Sicht auf die Anzeigefläche 10, also zum Beispiel auf ein Display, (wie etwa bei einer Seitenfensterscheibe im Kraftfahrzeug 14) wird die Anzeige für den Betrachter unverzerrt dargestellt und somit gut lesbar. Bewegungen des Benutzers 18 werden dynamisch ausgeglichen und ein ermüdungsfreies Betrachten der Inhalte wird ermöglicht.

Das digitale Bild 26 oder digitale Bilder 26, können an der richtigen Position mittels "Augmented Reality" (AR) auf der Anzeigefläche 10 oder mehreren Anzeigeflächen 10, also zum Beispiel auf Bildschirmen, dargestellt werden. Die erste Sensoreinrichtung 22, die zum Beispiel mehrere Kameras umfassen kann, kann dabei die Blickrichtung P des Benutzers 18, also des Betrachters, erfassen und eine passgenaue Positionierung auf einem definierten Anzeigebereich ermöglichen. Eine Steuereinrichtung 24, beispielsweise ein Computer, kann aus dem Winkel von dem Benutzer 18 zu dem beispielhaften Bildschirm einen Anpassungsfaktor berechnen, also den Anzeigeparameter, der in "Echtzeit" zum Beispiel zu einem geneigten digitalen Bild 26 verrechnet werden kann. Ein beispielhaftes rechteckiges digitales Bild 26 kann beispielsweise zu einem sich öffnenden Trapez verzerrt werden, damit es aus Betrachter-Perspektive unverzerrt erscheint (Fig. 5a, Fig. 5b, Fig. 5c).

Gemäß einem weiteren Ausführungsbeispiel kann ein form- und farbangepasstes digitales Bild 26 als Marker um ein reales Objekt 20 der Anzeigefläche 10, beispielsweise auf einem transparenten Scheibendisplay, angezeigt werden.

Hierzu kann auf der Anzeigefläche 10, zum Beispiel auf einer transparenten Seitenfensterscheibe des Kraftfahrzeugs 14, mit einem transparenten Display, das reale Objekt 20, das der Benutzer 18 außerhalb des Kraftfahrzeugs 14 sieht, mit form- und farbangepasstem digitalen Bild 26, also einem form- und farbangepassten "Marker", umrahmen. Bei einer relativen Bewegung zwischen dem Benutzer 18 und dem Objekt 20 kann das digitale Bild 26 auf der Anzeigefläche 10 so positioniert werden, dass es das reale Objekt 20 immer genau umrahmen kann.

Diese Anwendung ist insbesondere für Benutzer 18 eines pilotierten Kraftfahrzeugs 14 gedacht (oder zum Beispiel die Mitfahrer in einem Kraftfahrzeug 14, das von einer Person gesteuert wird). Die Anzeigefläche 10 oder mehrere Anzeigeflächen 10, also die beispielhaften Fensterscheiben, können flächendeckend mit einem transparenten Display versehen sein.

Das reale Objekt 20, das der Benutzer 18 außerhalb des Kraftfahrzeugs 14 sieht, oder die realen Objekte 20, die mehrere Benutzer 18 außerhalb des Kraftfahrzeugs 14 sehen, können mit form- und/oder farbangepassten "Markern" umrahmt werden. Bei einer relativen Bewegung zwischen dem Benutzer 18 und dem realen Objekt 20 außerhalb können diese Marker auf dem beispielhaften Display so positioniert werden, dass sie die realen Objekte 20 immer genau umrahmen.

Die realen Objekte 20 oder das reale Objekt 20 können auf Basis von einem Interessenprofil des Benutzers 18 selektiert werden. Dieses Profil kann zum Beispiel anhand von einem Internetverhalten, Gesprächen im Kraftfahrzeug 14 und/oder durch Fragebogen erstellt werden. Eine solche Vorfilterung ermöglicht, dass in manchen Situationen nicht zu viele Objekte markiert werden.

Die Fig. 3a zeigt dabei beispielhaft ein Bild eines Seepanoramas P, so wie es von einem Benutzer 18 im Kraftfahrzeug 17 gesehen werden kann. Die Fig. 3b zeigt beispielhaft, dass die für mehrere Benutzer 18 interessanten Objekte 20 form- und/oder farbangepasst umrahmt sein können.

Die beispielhafte Form des Markers kann einer Kontur des realen Objektes 20 folgen. Die Farbe kann so gewählt werden, dass sie einen guten Kontrast bietet zu einem Hintergrund. Das beispielhafte Schiff kann zum Beispiel grün umrahmt und die Gebäude im Wald blau umrahmt werden.

Die Fig. 6a zeigt ein weiteres Ausführungsbeispiel eines Kraftfahrzeugs 14, das außerhalb vom Auto Kameras 29 aufweisen kann, die die Umgebung erfassen oder registrieren können (S5).

Die Fig. 6b zeigt ein weiteres Ausführungsbeispiel eines Kraftfahrzeugs 14, mit beispielhaften Kameras im Innenraum, die die Benutzer 18 und zum Beispiel ihre Augenbewegungen erfassen oder registrieren (S1). So kann zum Beispiel berechnet werden, welcher Benutzer 18 was außerhalb des Kraftfahrzeugs 14 sieht.

Das digitale Bild 26, also der beispielhafte Marker, kompensiert die relative Bewegung zwischen einem Benutzer 18 und dem realen Objekt 20.

Es kann weiterhin vorgesehen sein, auf einem beispielhaften Display Marker für mehrere Benutzer 18 zu zeigen. Die Marker können durch Farbe und/oder Form angepasst sein. Beispielsweise transparenten Dual-View-Display als Anzeigeeinrichtung 16 kann die Anzahl der beispielhaften Marker, die für einen Benutzer 18 sichtbar sind, reduziert werden, so dass man nicht die Marker sieht, die nicht für einen bestimmt sind.

Die Fig. 4a und Fig. 4b zeigen ein weiteres Ausführungsbeispiel, gemäß dem bei einem "Touchen" als Bedienhandlung innerhalb eines beispielhaften Markers sich ein Menü mit Informationen öffnen kann.

Hier ergeben sich die Vorteile, dass die beispielhaften Marker nur gezeigt werden, wenn ein Objekt für den Benutzer 18 interessant ist. Die beispielhaften Marker sind form- und/oder farbangepasst für eine bessere Sichtbarkeit. Wenn beispielsweise zwei Objekte sich überlagern, können sie durch die form- und/oder farbangepasste Form besser unterscheiden und damit besser auseinandergehalten werden. Die beispielhaften Marker können direkt auf der beispielhaften Fensterscheibe sichtbar sein und nicht auf einem extra Gerät, wie zum Beispiel einem Head-up-Display oder einem mobilen Endgerät. Auf beispielsweise einem transparenten Dual-View-Display sieht man nur die Marker, die für einen bestimmt sind (zum Beispiel falls der Blickwinkel unterschiedlich genug ist, beispielsweise größer 90 Grad).

## Patentansprüche

1. Verfahren zum Betreiben einer Anzeigeeinrichtung (16) eines Kraftfahrzeugs (14), wobei die Anzeigeeinrichtung (16) dazu eingerichtet ist, ein digitales Bild (26) auf einer transparenten Anzeigefläche (10) des Kraftfahrzeugs (14) auszugeben, umfassend die Schritte:
- durch eine erste Sensoreinrichtung (22) Erfassen einer Blickrichtung (B) eines Benutzers (18), der sich in einem Innenraum des Kraftfahrzeugs (14) befindet, auf die Anzeigefläche (10, S1),
- durch eine Steuereinrichtung (24) in Abhängigkeit von der erfassten Blickrichtung (B) Festlegen eines Anzeigeparameters des digitalen Bildes (26, S2), der eine absolute bildliche Ausgestaltung des digitalen Bildes (26) vorgibt und dabei berücksichtigt, dass sich aus der Blickrichtung (B) des Benutzers (18) auf die absolute bildliche Ausgestaltung des digitalen Bildes (26) eine relative, perspektivisch bedingte Ausgestaltung des digitalen Bildes (26) ergibt, sodass die relative, perspektivisch bedingte Ausgestaltung einer Soll-Ausgestaltung des digitalen Bildes (26) entspricht,
- Erzeugen des digitalen Bildes (26) durch die Steuereinrichtung (24, S3) in Abhängigkeit von dem festgelegten Anzeigeparameter und Übertragen des digitalen Bildes (26) an die Anzeigeeinrichtung (16), und
- Ausgeben des digitalen Bildes (26) auf der Anzeigefläche (10, S4),
das Verfahren aufweisend den Schritt:
- durch eine zweite Sensoreinrichtung (28) des Kraftfahrzeugs (14) Erfassen der Umgebung des Kraftfahrzeugs (14, S5),
und **gekennzeichnet durch** die von der Steuereinrichtung durchgeführten Schritte:
- anhand der erfassten Blickrichtung (B) Ermitteln der durch den Benutzer (18) durch die Anzeigefläche (10) sichtbaren Umgebung des Kraftfahrzeugs (14, S6),
- Ermitteln eines realen Objekts (20) in der durch den Benutzer (18) sichtbaren Umgebung und einer Kontur und Farbe des realen Objekts (26) anhand von Sensordaten der zweiten Sensoreinrichtung (28, S7), und
- in Abhängigkeit von der ermittelten Kontur und Farbe des realen Objekts (20) Anpassen des Anzeigeparameters (S8), sodass die absolute bildliche Ausgestaltung des digitalen Bildes (26) eine der Kontur des realen Objekts (20) entsprechende Kontur und eine von der Farbe des realen Objekts (20) unterschiedliche Farbe hat,
- in Abhängigkeit von einer Verbindungslinie (V) zwischen einem Augpunkt (A) des Benutzers (18) und dem durch die transparente Anzeigefläche (10) liegenden realen Objekt (20) Ermitteln eines Schnittpunkts (S) der Verbindungslinie (V) mit der transparenten Anzeigefläche (10, S9),
- Anpassen des Anzeigeparameters (S8), der den ermittelten Schnittpunkt (S) als Position des digitalen Bildes (20) auf der Anzeigefläche (10) beschreibt, zum Markieren des durch den Benutzer (18) sichtbaren realen Objekts (20) auf der Anzeigefläche (10), und
- Ermitteln einer Perspektive, aus der der Benutzer (18) das digitale Bild (26) sieht;
wobei das Festlegen des Anzeigeparameters (S2) die ermittelte Perspektive berücksichtigt und wobei der Anzeigeparameter eine perspektivische Entzerrung des digitalen Bildes (26) beschreibt, sodass das digitale Bild (26) aus einer Sollperspektive betrachtet werden kann.

2. Verfahren nach Anspruch 1, wobei
der Bildschirm eigenleuchtende Pixel aufweist und die Anzeigeeinrichtung (16) die Anzeigefläche (10) umfasst.

3. Verfahren nach einem der vorhergehenden Ansprüche, **gekennzeichnet durch** die Schritte:
- Bereitstellen eines Interessensprofils des Benutzers (18, S10),
- Ermitteln einer Priorität des ermittelten realen Objekts (20) anhand des Interessenprofils des Benutzers (18, S11), und
- Erzeugen des digitalen Bildes (20, S3), falls die ermittelte Priorität einen vorbestimmten Wert aufweist (S12).

4. Verfahren nach Anspruch 3, **gekennzeichnet durch** die Schritte:
- Ermitteln eines Kontexts eines Verhaltens des Benutzers (18) durch a) Ermitteln eines Inhaltes von dem Benutzer (18) besuchten Internetseiten durch eine Browsereinrichtung (32), und/oder durch b) Ermitteln eines Inhaltes eines Gespräches des Benutzers (18) in dem Innenraum durch eine Sprachaufnahme- und Spracherkennungseinrichtung (30) der Steuereinrichtung (24, S13), und/oder c) Ermitteln eines Inhaltes eines digitalen Fragebogens; und/oder d) Ermitteln eines geographischen Ortes, den der Benutzer mit oder ohne das Kraftfahrzeug besucht hat, und
- Erstellen des Interessensprofils des Benutzers (18) anhand des ermittelten Kontexts (S14).

5. Verfahren nach einem der vorhergehenden Ansprüche, aufweisend die Schritte:
- Erfassen einer Krümmung der Anzeigefläche (10), und
- Ermitteln des Anzeigeparameters (S2) anhand der erfassten Krümmung.

6. Steuereinrichtung (24), wobei die Steuereinrichtung dazu eingerichtet ist, die eine Steuereinrichtung (24) betreffenden Verfahrensschritte eines Verfahrens nach einem der Ansprüche 1 bis 5 durchzuführen.

7. Kraftfahrzeug (14), aufweisend eine Steuereinrichtung (24) nach Anspruch 6, eine Anzeigeeinrichtung (16) und eine Anzeigefläche (10), wobei die Anzeigeeinrichtung (16) die Anzeigefläche (10) umfasst und als transparenter Bildschirm mit eigenleuchtenden Pixeln ausgestaltet ist.

8. Kraftfahrzeug nach Anspruch 7, wobei eine Fensterscheibe des Kraftfahrzeugs (14) als Bildschirm und/oder als Dual-View-Bildschirm ausgestaltet ist.

## Claims

1. Method for operating a display device (16) of a motor vehicle (14), wherein the display device (16) is arranged to output a digital image (26) on a transparent display surface (10) of the motor vehicle (14), the method comprising the steps:
- capturing, by a first sensor device (22), a viewing direction (B) of a user (18) situated in an inner space of the motor vehicle (14) toward the display surface (10, S1),
- determining, by a control device (24), in dependence on the captured viewing direction (B), a display parameter of the digital image (26, S2), which parameter specifies an absolute visual form of the digital image (26) and in so doing takes account of the fact that from the viewing direction (B) of the user (18) on the absolute visual form of the digital image (26) a relative, perspective-dependent form of the digital image (26) results, so that the relative, perspective-dependent form corresponds to an intended form of the digital image (26),
- producing the digital image (26) by the control device (24, S3) in dependence on the determined display parameter and transmitting the digital image (26) to the display device (16), and
- output of the digital image (26) on the display surface (10, S4),
the method comprising the step:
- capturing, by a second sensor device (28) of the motor vehicle (14), the environment of the motor vehicle (14, S5),
and **characterised by** the steps carried out by the control device:
- on the basis of the captured viewing direction (B), determining the environment of the motor vehicle (14, S6) that is visible to the user (18) through the display surface (10),
- determining a real object (20) in the environment that is visible to the user (18) and an outline and colour of the real object (26) using sensor data of the second sensor device (28, S7), and
- depending on the detected outline and colour of the real object (20), adjusting the display parameter (S8), so that the absolute visual form of the digital image (26) has an outline that corresponds to the outline of the real object (20) and a colour that differs from the colour of the real object (20),
- depending on a connection line (V) between an eye (A) of the user (18) and the real object (20) lying through the transparent display surface (10), determining a point of intersection (S) of the connection line (V) with the transparent display surface (10, S9),
- adjusting the display parameter (S8), which describes the determined point of intersection (S) as a position of the digital image (20) on the display surface (10), to mark on the display surface (10) the real object (20) that is visible to the user (18), and
- determining a perspective from which the user (18) sees the digital image (26);
wherein the determination of the display parameter (S2) takes into account the determined perspective and wherein the display parameter describes a perspective equalisation of the digital image (26), so that the digital image (26) can be viewed from an intended perspective.

2. Method according to claim 1, wherein
the screen has self-illuminating pixels and the display device (16) comprises the display surface (10).

3. Method according to any one of the preceding claims, **characterised by** the steps:
- preparing an interest profile of the user (18, S10),
- determining a priority of the determined real object (20) on the basis of the interest profile of the user (18, S11), and
- producing the digital image (20, S3), if the determined priority has a predetermined value (S12).

4. Method according to claim 3, **characterised by** the steps:
- determining a context of a behaviour of the user (18) by a) determining a content of an internet site visited by the user (18) through a browser device (32), and/or b) determining a content of a conversation of the user (18) in the inner space through a speech-recording and speech-recognition device (30) of the control device (24, S13), and/or c) determining a content of a digital questionnaire; and/or d) determining a geographical location that the user has visited with or without the motor vehicle, and
- creating the interest profile of the user (18) on the basis of the determined context (S14).

5. Method according to any one of the preceding claims, comprising the steps:
- capturing a curvature of the display surface (10), and
- determining the display parameter (S2) based on the captured curvature.

6. Control device (24), wherein the control device is configured to carry out the steps related to a control device (24) of a method according to any one of claims 1 to 5.

7. Motor vehicle (14), having a control device (24) according to claim 6, a display device (16) and a display surface (10), wherein the display device (16) comprises the display surface (10) and is configured as a transparent screen with self-illuminating pixels.

8. Motor vehicle according to claim 7, wherein a window pane of the motor vehicle (14) is configured as a screen and/or as a dual-view screen.

## Revendications

1. Procédé de fonctionnement d'un dispositif d'affichage (16) d'un véhicule automobile (14), dans lequel le dispositif d'affichage (16) est configuré pour délivrer une image numérique (26) sur une surface d'affichage transparente (10) du véhicule automobile (14), comprenant les étapes suivantes :
- Détection, par un premier dispositif de capteur (22), d'une direction de vision (B) d'un utilisateur (18) se trouvant dans l'habitacle du véhicule automobile (14) vers la surface d'affichage (10, S1),
- Détermination, par un dispositif de commande (24), en fonction de la direction de vision détectée (B), d'un paramètre d'affichage de l'image numérique (26, S2) qui spécifie une forme picturale absolue de l'image numérique (26) et qui prend en compte le fait qu'une forme relative, conditionnée par la perspective, de l'image numérique (26) est obtenue à partir de la direction de vision (B) de l'utilisateur (18) vers la forme picturale absolue de l'image numérique (26), de sorte que la forme relative, conditionnée par la perspective, correspond à une forme souhaitée de l'image numérique (26),
- Génération de l'image numérique (26) par le dispositif de commande (24, S3) en fonction du paramètre d'affichage déterminé et transmission de l'image numérique (26) au dispositif d'affichage (16), et
- Emission de l'image numérique (26) sur la surface d'affichage (10, S4),
le procédé comprenant l'étape suivante :
- Détection, par un second dispositif de capteur (28) du véhicule automobile (14) de l'environnement du véhicule automobile (14, S5), et **caractérisé par** les étapes suivantes réalisées par le dispositif de commande :
- Détermination, au moyen de la direction de vision détectée (B), de l'environnement du véhicule automobile (14, S6) visible par l'utilisateur (18) à travers la surface d'affichage (10),
- Détermination d'un objet réel (20) dans l'environnement visible par l'utilisateur (18) et d'un contour et d'une couleur de l'objet réel (26) au moyen des données de capteur du second dispositif de capteur (28, S7), et
- En fonction du contour et de la couleur déterminés de l'objet réel (20), adaptation du paramètre d'affichage (S8), de sorte que la forme picturale absolue de l'image numérique (26) présente un contour correspondant au contour de l'objet réel (20) et une couleur différente de celle de l'objet réel (20),
- En fonction d'une ligne de jonction (V) entre un point formant œil (A) de l'utilisateur (18) et l'objet réel (20) situé à travers la surface d'affichage transparente (10), détermination d'un point d'intersection (S) de la ligne de jonction (V) avec la surface d'affichage transparente (10, S9),
- Adaptation du paramètre d'affichage (S8) qui décrit le point d'intersection déterminé (S) en tant que position de l'image numérique (20) sur la surface d'affichage (10) en vue du marquage de l'objet réel (20) visible par l'utilisateur (18) sur la surface d'affichage (10), et
- Détermination d'une perspective à partir de laquelle l'utilisateur (18) voit l'image numérique (26) ;
moyennant quoi l'établissement du paramètre d'affichage (S2) prend en compte la perspective déterminée et moyennant quoi le paramètre d'affichage décrit une égalisation en perspective de l'image numérique (26), de sorte que l'image numérique (26) peut être considérée à partir d'une perspective théorique.

2. Procédé selon la revendication 1, dans lequel
l'écran comporte des pixels auto-lumineux et le dispositif d'affichage (16) comprend la surface d'affichage (10).

3. Procédé selon l'une des revendications précédentes, **caractérisé par** les étapes suivantes :
- Fourniture d'un profil d'intérêt de l'utilisateur (18, S10),
- Détermination d'une priorité de l'objet réel déterminé (20) au moyen du profil d'intérêt de l'utilisateur (18, S11), et
- Production de l'image numérique (20, S3) au cas où la priorité déterminée présente une valeur prédéfinie (S12).

4. Procédé selon la revendication 3, **caractérisé par** les étapes suivantes :
- Détermination d'un contexte d'un comportement de l'utilisateur (18) par a)
la détermination d'un contenu des pages Internet visitées par l'utilisateur (18) par un dispositif de navigation (32), et/ou par b) la détermination d'un contenu d'une conversation de l'utilisateur (18) dans l'habitacle par un dispositif d'enregistrement vocal et de reconnaissance vocale (30) du dispositif de commande (24, S13), et/ou c) la détermination d'un contenu d'un questionnaire numérique ; et/ou d) la détermination d'un lieu géographique que le visiteur a visité avec ou sans le véhicule, et
- Etablissement du profil d'intérêt de l'utilisateur (18) au moyen du contexte déterminé (S14).

5. Procédé selon l'une quelconque des revendications précédentes, comprenant les étapes suivantes :
- Détection d'une courbure de la surface d'affichage (10), et
- Détermination du paramètre d'affichage (S2) au moyen de la courbure détectée.

6. Dispositif de commande (24) dans lequel le dispositif de commande est configuré pour réaliser les étapes de procédé d'un procédé concernant un dispositif de commande (24) selon l'une des revendications 1 à 5.

7. Véhicule automobile (14) comportant un dispositif de commande (24) selon la revendication 6, un dispositif d'affichage (16) et une surface d'affichage (10), dans lequel le dispositif d'affichage (16) comprend la surface d'affichage (10) et est conçu comme un écran transparent avec des pixels auto-lumineux.

8. Véhicule automobile selon la revendication 7, dans lequel une vitre du véhicule (14) est conçue comme un écran et/ou comme un écran Dual-View (affichage double).
